# EUROPEAN PATENT SPECIFICATION

(11) **EP 3 033 939 B1**
(45) Date of publication and mention of the grant of the patent: **18.10.2017**
(21) Application number: 15200742.3
(22) Date of filing: 17.12.2015
(51) Int. Cl.: A01G 1/00

(54) **METHOD OF AFFORESTING INFERTILE SOIL USING PISOLITHUS TINCTORIUS**
VERFAHREN ZUR AUFFORSTUNG VON UNFRUCHTBAREM BODEN MIT PISOLITHUS TINCTORIUS
PROCÉDÉ DE FORESTATION DE SOL INFERTILES EN UTILISANT PISOLITHUS TINCTORIUS

(30) Priority: 18.12.2014 KR 20140183545
(43) Date of publication of application: 22.06.2016
(73) Proprietor: Braintree Biotechnology Institute, Seoul 151-832 (KR); Do Sung Development Co., Ltd., Gyeonggi-do 487-826 (KR); Do Sung Environment Co., Ltd., Gyeonggi-do 472-835 (KR)
(72) Inventor: YUN, Hye Young, 156-030 Seoul (KR); LEE, Kyung Joon, 156-030 Seoul (KR)
(74) Representative: Gill, Siân Victoria

(56) References cited:
- WO-A2-02/065836
- US-A- 4 327 181
- US-A1- 2010 021 515
- Cordell CE, Omdal DW, Marx DH: "Operational Ectomycorrhizal Fungus Inoculations in Forest Tree Nurseries: 1989", REFORESTATION, NURSERIES & GENETICS RESOURCES , 1989, XP002756673, Retrieved from the Internet: URL:http://www.rngr.net/publications/proce edings/1989/cordell2.pdf/ [retrieved on 2016-04-18]

## Description

### TECHNICAL FIELD

The present invention relates to a method of afforesting infertile soil using *Pisolithus tinctorius,* and more particularly to a method capable of afforestation by introducing microbial components including *Pisolithus tinctorius* into soil to grow seedlings, which may grow well in infertile soil, and then by transplanting the seedlings to infertile soil for afforestation.

### BACKGROUND ART

A mycorrhiza refers to symbiosis of roots of plants and soil fungi. Fungi absorb water and inorganic nutrients and transfer the absorbed substances to host plants, while the host plants provide the fungi with carbohydrates for living. Through mycorrhiza formation, host plants may survive infertile soil having low nutrients and water contents. Most wild plants living in terrestrial ecosystems have mycorrhizae. A representative example is mycorrhiza formation between pine tree roots and pine mushrooms. Among various mycorrhiza fungi, *Pisolithus tinctorius* has been known as a fungus which has a symbiotic relationship with pine trees in infertile soil, thereby leading to resistance of the pine trees against dryness and barrenness. For example, according to the documents (Journal of Korean Forestry society, 64:11-19. 1984 or Journal of Korean Forestry society 83(4):531-539. 1994), it can be found that the growth rate of tree seedlings is increased when *Pisolithus tinctorius* mycorrhizae are artificially inoculated.

In the case where a chemical property of soil is converted into an abnormal state due to accumulation of specific chemical substances resulting from land development of humans, the soil condition generally becomes uninhabitable to microorganisms, so that growth of plants is unfavorable. When such soil is used as foundation soil for planting, there are problems of decline in growth of plants or suffocation of plant roots caused by poor permeability of air and water, generation of noxious gases due to decomposition of organic substances, and imbalance of mineral ions.

Since such infertile soil has many problems, various studies are required to solve the problems by afforesting the soil.

Korean Registered Patent Publication No. 10-0696099 discloses a technique of converting acidified soil due to accumulation of chemical substances, heavy metal contamination, and long-term use of chemical fertilizers (such as a land adjacent to ocean, a landfill, and a land for golf course) into an optimal inhabited environment for growth of plants by using soil mix in which vermiculite, perlite, natural zeolite, ceramic powder, tree barks, activated carbon, granite and peat moss are mixed.

Further, Korean Registered Patent Publication No. 10-0767054 discloses a technique of converting infertile soil (such as slope lands) into foundation soil suitable for growth of plants by using a soil improving agent including sludge and gypsum by-product, coco peat, compost and granite. Furthermore, an internet publication from C.E. Cordell et al. with the titel "Operational Ectomycorrhizal Fungus Inoculations in Forest Tree Nurseries (1989)" (www.rngr.net/ publications/proceedings/1989/corde112.pdf) discloses a method of afforesting infertile soil using Pisolithus tinctorius. Therefore, during a study about a method of afforesting infertile soil by artificially inoculating *Pisolithus tinctorius* mycorrhiza to cultivate seedlings which may be introduced to infertile soil, the present inventors have complete the present invention by finding that the mycorrhiza formation rate and growth rate of the seedlings and mycorrhizal formation rates may be enhanced by using the *Pisolithus tinctorius* fungus together with a soil improving agent.

### DISCLOSURE OF THE INVENTION

### TECHNICAL PROBLEM

An object of the present invention is to provide a method of afforesting infertile soil, including introducing *Pisolithus tinctorius* into soil; and further introducing a soil improving agent, so that excellent growth rates of seedlings may be achieved, and a mycorrhiza formation rate may be enhanced.

### TECHNICAL SOLUTION

The present invention provides a method of afforesting infertile soil using *Pisolithus tinctorius,* including: a first step for disinfecting soil; a second step for introducing, to the disinfected soil, a bark and a medium, in which *Pisolithus tinctorius* is solid cultured, and mixing the resultant; a third step for sowing a disinfected seed of a plant species in the soil in step 2, introducing a soil improving agent, and mulching with disinfected straws; a fourth step for cultivating the plants ; and a fifth step for harvesting the prepared seedlings and planting them in infertile or polluted soil.

In a preferred embodiment of the present invention, the disinfection may be performed by using a soil fumigant which may include at least one selected from the group consisting of chloropicrin, methyl bromide, and cyanide lime.

In a preferred embodiment of the present invention, the medium for culturing *Pisolithus tinctorius* may include artificial culture soil including at least one selected from the group consisting of bentonite, vermiculite, zeolite, and peat moss, and may be cultured at 20-30°C for 50-100 days after a first culture medium is further added, and *Pisolithus tinctorius* is inoculated.

In a preferred embodiment of the present invention, the medium for culturing *Pisolithus tinctorius* may include artificial culture soil including at least one selected from the group consisting of bentonite, vermiculite, zeolite, and peat moss, and may be cultured at 20-30°C for 50-100 days after a first culture medium is further added, and *Pisolithus tinctorius* is inoculated.

The culture medium may include artificial culture soil medium. In a preferred embodiment of the present invention, the artificial culture soil medium may include vermiculite, and peat moss.

In a preferred embodiment of the present invention, the first culture medium may include distilled water, potassium monophosphate, ammonium diphosphate, magnesium sulfate, calcium nitrate, iron chloride, thiamine, malt extracts, and glucose.

In a preferred embodiment of the present invention, the first culture medium may include 0.01-0.05 parts by weight of potassium monophosphate, 0.01-0.03 parts by weight of ammonium diphosphate, 0.005-0.02 parts by weight of magnesium sulfate, 0.001-0.01 parts by weight of calcium nitrate, 0.0005-0.002 parts by weight of iron chloride, 0.000005-0.00002 parts by weight of thiamine, 0.1-0.5 parts by weight of malt extracts, and 0.5-2 parts by weight of glucose with respect to 100 parts weight of distilled water.

In a preferred embodiment of the present invention, *Pisolithus tinctorius* cultured in the medium in step 2 may play a role as a microbial fertilizer, and the bark may be introduced to the soil in an amount of 5-10 L per 1 m² of soil.

In a preferred embodiment of the present invention, the medium including *Pisolithus tinctorius* and the bark have a volume ratio of 1:4-6.

In a preferred embodiment of the present invention, the plant species in step 3 may includes at least one selected from the group consisting of *Pinus* spp., *Keteleeria* spp., *Larix* spp., *Picea* spp., *Tsuga* spp., *Abies* spp., *Pseudotsuga* spp., *Cedrus* spp., *Pseudolarix* spp., *Salix* spp., *Populus* spp., *Chosenia* spp., *Betula* spp., *Alnus* spp., *Carpinus* spp., *Ostrya* spp., *Corylus* spp., *Fagus* spp., *Castanea* spp., *Castanopsis* spp., *Lithocarpus* spp., *Quercus* spp., *Tilia* spp. and *Grewia* spp.

In a preferred embodiment of the present invention, in step 3, the plant species may be sowed in soil at a depth of 2-10 cm, such that a space between seeds is 3-5 cm and a space between rows is 10-15 cm.

In a preferred embodiment of the present invention, in step 2, the soil improving agent includes a second culture medium and a soil improving component at a volume ratio of 1:1-12.

In a preferred embodiment of the present invention, the second culture medium may include 0.08-0.15 parts by weight of potassium monophosphate, 0.01-0.03 parts by weight of ammonium diphosphate, 0.01-0.02 parts by weight of magnesium sulfate, 0.01-0.05 parts by weight of calcium nitrate, 0.0005-0.002 parts by weight of iron chloride, and 0.00001-0.00003 parts by weight of thiamine with respect to 100 parts weight of distilled water.

In a preferred embodiment of the present invention, the soil improving component may include 20-40 parts by weight of a nitrogen compound, 20-40 parts by weight of a phosphorous compound, 2-4 parts by weight of a sulfur compound and 0.02-0.04 parts by weight of a boron compound with respect to 100 parts by weight of the artificial culture soil including at least one selected from the group consisting of bentonite, vermiculite, zeolite, and peat moss.

In a preferred embodiment of the present invention, in step 2, the soil improving agent is introduced into the soil in an amount of 1-5 L per 1 m² of soil.

In a preferred embodiment of the present invention, step 4-1 is further included in which hyphae of *Pisolithus tinctorius* are added to the soil where the seedling is cultivated in step 4.

Hereinafter, the term used herein will be defined.

The term "artificial culture soil" herein is artificial soil including at least one selected from the group consisting of bentonite, vermiculite, zeolite, and peat moss for culturing *Pisolithus tinctorius.*

The term "first culture medium" herein is that to be introduced to a mixture of artificial culture soil and *Pisolithus tinctorius,* and is characterized by including distilled water, potassium, monophosphate, ammonium diphosphate, magnesium sulfate, calcium nitrate, iron chloride, thiamine, malt extracts and glucose.

The term "microbial fertilizer" herein generically refers to a mixture of artificial culture soil and a first culture medium into which *Pisolithus tinctorius* is inoculated and then barks are added.

The term "soil improving agent" herein refers to a mixture of a soil improving component and a second culture medium, wherein the soil improving component is at least one selected from the group consisting of bentonite, vermiculite, zeolite, and peat moss, and the second culture medium includes distilled water, potassium monophosphate, ammonium diphosphate, magnesium sulfate, calcium nitrate, iron chloride, and thiamine.

### ADVANTAGEOUS EFFECTS

According to the present invention, provided is a method of afforesting infertile soil by introducing *Pisolithus tinctorius,* which is a mycorrhiza promoting fungus, thereby, assisting the infected plants to grow well. Consequently, it is possible to improve infertile soil and make forest, so that cultivation or reforestation of marginal soil is enhanced; environment is improved; and environmental pollution is reduced.

### BRIEF DESCRIPTION OF THE DRAWINGS

FIG. 1 is an image of *Pinus densiflora* (age: two months) growing in infertile soil treated with a microbial fertilizer and a soil improving agent (left side: *Pisolithus tinctorius*-inoculated seedling, right side: non-inoculated seedling).
FIG. 2 is an image, which is observed through a dissecting microscope, showing mycorrhiza formation in a *Pinus densiflora* roots according to an example of the present invention.
FIG. 3 is an image, which is observed through a dissecting microscope, showing mycorrhiza formation in a *Pinus densiflora* roots according to the application of the present invention.

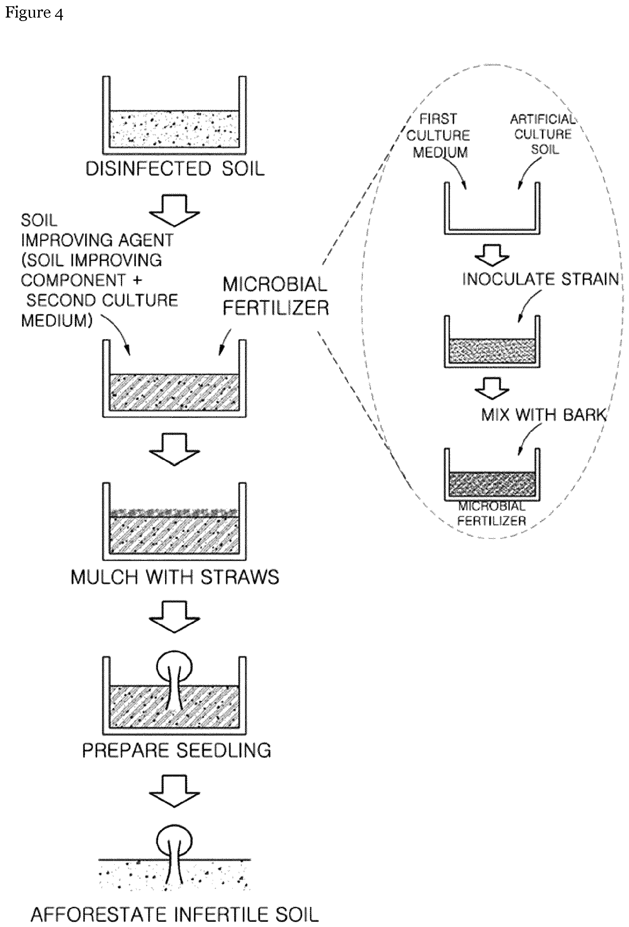

FIG. 4 is a schematic diagram showing a method of the present invention.

### MODE FOR CARRYING OUT THE INVENTION

The present invention relates to a method of afforesting infertile soil using *Pisolithus tinctorius,* the method including: a first step for disinfecting soil; a second step for introducing, to the disinfected soil, a bark and a medium, in which *Pisolithus tinctorius* is cultured, and then mixing the resultant; a third step for sowing disinfected seeds of a plant species to the soil in step 2, introducing a soil improving agent, and then mulching with disinfected straws; a forth step for cultivating the plant species sowed in the soil; and a fifth step for harvesting the prepared seedlings and planting them in infertile soil. Hereinafter, the present invention will be described stepwise in more detail.

In the method of afforesting infertile soil using *Pisolithus tinctorius* according to the present invention, the first step is for disinfecting soil, in which the disinfection is performed by using a soil fumigant. The soil fumigant is a chemical, which is injected into soil and controls harmful animals, plants and microorganisms in soil. Infertile soil may be disinfected by using the soil fumigant to prevent introduction of other microorganisms and pathogens except a soil improving agent including *Pisolithus tinctorius* in next steps. Although any typically used soil fumigant is available, the soil fumigant may preferably be at least one selected from the group consisting of chloropicrin, methyl bromide, and cyanide lime, and more preferably methyl bromide. The methyl bromide may preferably be added to soil in an amount of 50-60 g per 1 m² of soil.

In addition, the disinfection is preferably performed as follow: the surface of soil to be disinfected is covered with vinyl or tent to block penetration of air; a soil fumigant is added to soil and left at least for 3 days for disinfection; and the vinyl or tent is removed. In addition, to remove remaining noxious gases of the soil fumigant, the disinfected soil is preferably left for at least 3 days. Through the process, other microorganisms and pathogens included in the soil may be removed.

In the method of afforesting infertile soil using *Pisolithus tinctorius* according to the present invention, the second step is for introducing, to the disinfected soil, barks and a medium, in which *Pisolithus tinctorius* is cultured and then mixing the resultant. The *Pisolithus tinctorius,* i.e., one type of mycorrhizae, is a fungus having symbiosis relationship with *Pinus* and other species in *Pinaceae* in infertile soil to thereby induce resistance of the treated trees against dryness and barrenness. *Pisolithus tinctorius* collected from domestic infertile soil is cultured, massively multiplied, and introduced into soil, so that *Pisolithus tinctorius* may grow in roots of a plant species to be sowed in the next step. In addition, the barks are introduced to allow the *Pisolithus tinctorius* included in the soil improving agent to maintain vitality until the *Pisolithus tinctorius* meets plant roots and starts symbiosis. A bark piece having a length of about 0.1-1 cm is preferably used. When the length of the bark piece is less than 0.1 cm, air permeability of soil becomes poor, so that survival of *Pisolithus tinctorius* is unfavorable. When the length of the bark piece is greater than 1 cm, growth of roots is interfered.

For culture of *Pisolithus tinctorius,* at least one selected from the group consisting of bentonite, vermiculite, zeolite, and peat moss is included. After the *Pisolithus tinctorius* is inoculated in a medium including artificial culture soil and a first medium, the culture is preferably performed for 50-100 days at 20-30°C, and more preferably 60-90 days at 25-28°C.

The culture may be performed in artificial soil. The artificial soil medium preferably includes vermiculite and peat moss. The first culture medium preferably includes distilled water, potassium monophosphate, ammonium diphosphate, magnesium sulfate, calcium nitrate, iron chloride, thiamine, malt extracts, and glucose. More particularly, the first culture medium may include 0.01-0.05 parts by weight of potassium monophosphate, 0.01-0.03 parts by weight of ammonium diphosphate, 0.005-0.02 parts by weight of magnesium sulfate, 0.001-0.01 parts by weight of calcium nitrate, 0.0005-0.002 parts by weight of iron chloride, 0.000005-0.00002 parts by weight of thiamine, 0.1-0.5 parts by weight of malt extracts, and 0.5-2 parts by weight of glucose with respect to 100 parts weight of distilled water.

In the method of afforesting infertile soil using *Pisolithus tinctorius* according to the present invention, the barks and the medium, in which the *Pisolithus tinctorius* are cultured in artificial soil in step 2, may be introduced in an amount of 5 to 10 L per 1 m² of soil. When the soil improving agent and bark are introduced in an amount less than 5 L per 1 m² of soil, there is a problem of shortage of a space for hideout of *Pisolithus tinctorius,* which is provided until the *Pisolithus tinctorius* meets host roots. In the case of exceeding 10 L per 1 m² of soil, soil effective in growth of plants is excessively diluted, thereby leading to a problem of slowdown of growth.

In step 2, the medium, in which the *Pisolithus tinctorius* is cultured, and the bark preferably has a volume ratio of 1:4-6, more particularly, 1:5-6. When the soil improving agent and bark are mixed at a volume ratio of less than 1:4, potential of *Pisolithus tinctorius* capable of being protected in a hideout at an appropriate time is reduced. Further, when mixing is performed at a ratio of greater than 1:6, the excessively added bark causes very low soil fertility, and decreased amount of effective soil which leads to decline in the effect of inoculating *Pisolithus tinctorius.*

In the method of afforesting infertile soil using *Pisolithus tinctorius* according to the present invention, the third step is for sowing disinfected seeds of a plant species to the soil in step 2; introducing a soil improving agent; and then mulching with disinfected straws. The plant species is at least one selected from the group consisting of *Pinus* spp., *Keteleeria* spp., *Larix* spp., *Picea* spp., *Tsuga* spp., *Abies* spp., *Pseudotsuga* spp., *Cedrus* spp., *Pseudolarix* spp., *Salix* spp., *Populus* spp., *Chosenia* spp., *Betula* spp., *Alnus* spp., *Carpinus* spp., *Ostrya* spp., *Corylus* spp., *Fagus* spp., *Castanea* spp., *Castanopsis* spp., *Lithocarpus* spp., *Quercus* spp., *Tilia* spp. and *Grewia* spp. Preferably, the plants species is a pine tree (*Pinus densiflora*), black pine *(Pinus thunbergii*)*, Pinus rigida* Mill, *Pinus bungeana,* or *Pinus rigida.*

Surfaces of the seeds of the plant species are preferably disinfected by using a hypochlorite solution. More particularly, disinfection may be performed by immersing the plant species into 0.1% hypochlorite solution.

Further, the plant species may preferably be sowed in soil at a depth of 2-10 cm, such that a space between seeds is 3-5 cm, and a space between rows is 10-15 cm. Although there is a variation depending on sizes of seeds, it is more preferable that the seeds are sowed in soil at a depth of 2-10 cm, such that a space between seeds is 4-5 cm and a space between rows is 10-12 cm. When the sowing is performed within the above range, productivity during cultivation of the plant species is most excellent.

When the sowing is ended, the surfaces of seeds are covered with disinfected soil such that the depth becomes 2 cm, and a soil improving agent is introduced thereon. Thereafter, mulching may be performed by covering the soil with disinfected straws. Through this process, it is possible to prevent loss of sowed seeds and damages caused by birds.

The soil improving agent preferably includes a second culture medium and a soil improving component. The culture medium preferably includes 0.01-0.05 parts by weight of potassium monophosphate, 0.01-0.03 parts by weight of ammonium diphosphate, 0.005-0.02 parts by weight of magnesium sulfate, 0.001-0.01 parts by weight of calcium nitrate, 0.0005-0.002 parts by weight of iron chloride, and 0.000005-0.00002 parts by weight of thiamine with respect to 100 parts by weight of distilled water. Further, the soil improving component preferably includes 20-40 parts by weight of a nitric acid compound, 20-40 parts by weight of a phosphoric acid compound, 20-40 parts by weight of a sulfuric acid compound and 20-40 parts by weight of a boron acid compound with respect to 100 parts by weight of artificial culture soil including at least one selected from the group consisting of bentonite, vermiculite, zeolite, and peat moss.

The soil improving agent may include the second culture medium and the soil improving component at a volume ratio of 1:1-12, preferably a volume ratio of 1:2-6, and more preferably a volume ratio of 1:5. Beyond the range, a rate of mycorrhiza infection during cultivation of a plant species is decreased, so that productivity is declined.

In the method of afforesting infertile soil using *Pisolithus tinctorius* according to the present invention, the forth step is for cultivating the plant species sowed in the soil to prepare a seedling. The cultivating may proceed together with watering and weeding. It is preferable that cultivating period is shortened by promoting growth as follows: about 2 years for pine trees; about 3 years for nut pines; and about 1 year for rigitaeda pines.

The method of afforesting infertile soil using *Pisolithus tinctorius* according to the present invention may further includes step 4-1, in which hyphae of cultured *Pisolithus tinctorius* are added to the soil where the seedlings are cultivated. When mycorrhiza formation in roots of the cultivated seedlings is low, it is preferable that culture products of artificially cultured *Pisolithus tinctorius* are further added to the soil for mycorrhiza formation.

In the method of afforesting infertile soil using *Pisolithus tinctorius* according to the present invention, step 5 is for afforesting infertile soil by harvesting the seedlings prepared in step 4. Since the seedlings prepared in step 4 have roots where mycorrhizae are formed, the seedlings are provided with mineral nutrients from the mycorrhizae, thereby capable of growing even in infertile soil.

An excellent afforesting effect on infertile soil is exhibited depending on properties of the infertile soil. Infertile soil preferably include a place where whole organic substances have been lost due to outbreak of a forest fire, newly exposed mineral soil due to landslide, newly formed sandy coastal dune at sea due to a sandstorm, a place where trees may not sufficiently grow due to stilled up sand and gravels caused by flood, sandy soil of a newly formed delta area at a mouth of river and other places where usually trees may not sufficiently grow.

Hereinafter, the present invention will be described in more detail with reference to preferred examples. Following examples are provided only for illustrating the present invention.

### [EXAMPLE]

### PREPARATION EXAMPLE 1. PREPARATION OF PISOLITHUS TINCTORIUS

The present inventors secured *Pisolithus tinctorius* by collecting the *Pisolithus tinctorius* at the campus of Kyung Hee University located at Suwon, South Korea and then isolating and identifying the resultant. The *Pisolithus tinctorius* was placed into a Styrofoam box filled with ice or dry ice, and transferred to the laboratory. Then, the surface of *Pisolithus tinctorius* was disinfected by using 1% of hypochlorite. The *Pisolithus tinctorius* was cut long by using a disinfected knife to expose fresh and aseptic inner tissue. The tissue was dissected and pulled out under the aseptic condition. Thereafter, the tissue was explanted on a Petri-dish containing solid agar and aseptic liquid nutritional medium. The used liquid nutritional medium includes 0.01-0.05 parts by weight of potassium monophosphate, 0.01-0.03 parts by weight of ammonium diphosphate, 0.005-0.02 parts by weight of magnesium sulfate, 0.001-0.01 parts by weight of calcium nitrate, 0.0005-0.002 parts by weight of iron chloride, 0.000005-0.00002 parts by weight of thiamine, 0.1-0.5 parts by weight of malt extracts and 0.5-2 parts by weight of glucose with respect to 100 parts by weight of distilled water. Boundaries of the petri-dish for explants were sealed with wrap, and then the petri-dish was placed into an incubator, and cultured at 26°C for two weeks. Elongation of cultured hyphae was observed to identify whether the strain is pure or not. Consequently, a strain of *Pisolithus tinctorius* PT1 was prepared.

### EXAMPLE 1. METHOD OF AFFORESTING INFERTILE SOIL USING PISOLITHUS TINCTORIUS

(1) Soil was disinfected by using a soil fumigant to eradicate pathogens and other microorganisms in a tree nursery located at Homaesil-ri, Gwonseon-gu, Suwon-si, and Gyeonggi-do. Disinfection of soil was performed as follows: at first, 500 m² of the surface of soil to be disinfected was covered with airtight vinyl or tent; methyl bromide gas was added to soil in an amount of 50 g per 1 m²; boundaries of the tent were sealed to block air penetration; disinfection of soil was continued for at least three days; after disinfection of soil was ended, the covered vinyl was removed; and soil was left for three days to remove remaining noxious gas.
(2) 770 cc of vermiculite (particle size standard 2 or diameter of 2 mm or more) and 30 cc of peat moss were mixed, and the resultant was poured into a culture vessel (1 L). Chemicals with the composition in Table 1 below were poured into a 1 L Erlenmeyer flask. The flask was covered with a cap made of cotton wool or aluminum foil. The flask was placed into hot water to allow all compounds to be dissolved in water. Then, 15 ml of a sterilized first culture medium was poured to a petri-dish, and the resultant was disinfected with a high pressure sterilizer to prepare the first culture medium of *Pisolithus tinctorius.*

400 ml of the first culture medium of *Pisolithus tinctorius* (see Table 1 below) was added to the culture vessel, and the resultant was placed into a high pressure sterilizer and sterilized for 15 minutes at 112°C.

**[Table 1]**

| Composition of first culture medium used in initial culture of mycorrhizae of *Pisolithus tinctorius* | | |
|---|---|---|
| Chemical Name | Structural formula | Content per 1 liter |
| Potassium monophosphate | KH₂PO₄ | 400 mg |
| Ammonium diphosphate | (NH₄)₂HPO₄ | 250 mg |
| Magnesium sulfate | MgSO₄7H2O | 100 mg |
| Calcium nitrate | Ca(NO₃)₂4H2O | 50 mg |
| Iron chloride | FeCl₃ | 10 mg |
| Thiamine | Thiamine hydrochloride | 0.1 mg |
| Malt extract | Malt extract | 4 g |
| Glucose | glucose | 10 g |
| Distilled water | Distilled water | 1,000 ml |

(2) The surface of the aseptic culture medium was inoculated with some strains of *Pisolithus tinctorius* cultured in Preparation Example 1. Then, the entry of the culture vessel was blocked with a cap, and the vessel was cultured for 70 days at 26°C. In this case, the *Pisolithus tinctorius* grew such that hyphae reach the bottom of the culture vessel.
(3) The surface of the disinfected nursery soil was smoothly digged with a clean shovel to 30 cm depth. 1 L of cultured *Pisolithus tinctorius* and 5 L of disinfected *Pinus densiflora* barks (sieved through 1 cm sieve) were added per 1 m² of soil, and thoroughly mixed with a shovel to 20 cm depth in order to thoroughly mix fungi and tree barks in soil.
Further, *Pinus densiflora* seeds were immersed in 0.1% hypochlorite solution for about one hour to disinfect the surfaces of the seeds. Then the seeds were washed with fresh aseptic water to remove remaining hypochlorite, and then dried. The seeds were sowed, such that a space between rows was 10 cm, and a space between seeds was 3 to 5 cm. After end of sowing, the surfaces of the seeds were covered with disinfected soil such that the depth became 2 cm. A soil improving agent was introduced, and then the soil was covered with disinfected straws.
For the soil improving agent, 600 mL of the second culture medium prepared according to the composition in Table 2 below was introduced into 1 L of the soil improving agent prepared according to the composition in Table 3 below, and then the resultant was disinfected for 15 minutes at 112°C and used.

**[Table 2]**

| Composition of components included in soil improving agent | | |
|---|---|---|
| Chemical name | Chemical name (chemical structural formula) | Content per 1 L |
| Potassium monophosphate | KH₂PO₄ | 1 g |
| Ammonium diphosphate | (NH₄)₂HPO₄ | 200 mg |
| Magnesium sulfate | MgSO₄7H2O | 100 mg |
| Calcium nitrate | Ca(NO₃)₂4H2O | 200 mg |
| Iron chloride | FeCl₃ | 10 mg |
| Thiamine | Thiamine hydrochloride | 1 mg |
| Distilled water | Distilled water | 1 L |

**[Table 3]**

| Composition of soil improving components included in soil improving agent | | |
|---|---|---|
| | Chemical name (chemical formula) | Content per 1 L |
| Vermiculite | | 650 g |
| Peat moos | | 50 g |
| Magnesium sulfate | MgSO₄ | 5 g |
| Calcium nitrate | Ca(NO₃)₂ | 5 g |
| Ammonium phosphate | (NH₄)H₂PO₄ | 5 g |
| Ammonium sulfate | (NH₄)₂SO₄ | 0.5 g |
| Boron | H₃BO₃ | 0.005 g |

(4) Cultivation of seedlings was performed from April, 2011 until April, 2013 in the soil where the *Pinus densiflora* seeds were sowed, while watering and weeding were performed regularly. Since *Pisolithus tinctorius* in soil may possibly be weakened, soil sterilants or ground sterilants were avoided in the initial phase of cultivation as possible. In addition, to prevent other microorganisms from being entered to the tree nursery, shoes of workers was maintained clean, and agricultural equipment was disinfected or clean exclusive agricultural equipment was separately used.
(5) Seedlings were collected by using a clean shovel. Since mycorrhizae were formed only in fine roots, care was taken to prevent fine roots from being cut or chipped off during the harvesting of seedlings. When fine roots were massively removed during the collecting, an inoculation effect may not be achieved due to loss of mycorrhizae, so that the collected seedlings were stored at low temperature in sealed containers such that roots were not dried.

The collected seedlings were planted to about 330 m² of infertile soil located at Pocheon, Gyeonggi-do. The infertile soil was a burn area where organic substances were removed and the surface was exposed due to landslide.

### EXPERIMENTAL EXAMPLE 1. GROWTH OF PLANTS WITH AND WITHOUT TREATMENT OF SOIL IMPROVING AGENT

An experiment was conducted by the method same as Example 1 except that sowing and cultivating were performed under the condition as in Table 4 below. Seedlings were prepared by the method same as Example 1, and height growth of *Pinus densiflora* was measured after about two years elapsed.

Table 4 below shows components introduced to supply nutrients for cultivation of seedlings and height growth of *Pinus densiflora* for each Example.

**[Table 4]**

| Height growth of *Pinus densiflora* at various ratio of second culture medium and soil improving component | | | |
|---|---|---|---|
| | Second culture medium of soil improving agent (L) | Soil improving component of soil improving agent (L) | Height growth (cm) |
| Example 1 | 0 | 3 | 12 |
| Example 2 | 0.5 | 3 | 13 |
| Example 3 | 1 | 3 | 15 |
| Example 4 | 2 | 3 | 15 |
| Example 5 | 0 | 5 | 13 |
| Example 6 | 0.5 | 5 | 14 |
| Example 7 | 1 | 5 | 19.7 |
| Example 8 | 2 | 5 | 19.3 |
| Example 9 | 0 | 7 | 13 |
| Example 10 | 0.5 | 7 | 14 |
| Example 11 | 1 | 7 | 16 |
| Example 12 | 2 | 7 | 16 |

As shown in Table 4 above, it can be found that, when *Pisolithus tinctorius* is cultured and introduced to seedbed soil for cultivating seedlings, a significantly excellent seedling may be produced, when compared with the case where *Pisolithus tinctorius* is not introduced. Also, it can be found that, when seedlings were cultivated by introducing the soil improving agent alone without *Pisolithus tinctorius,* growth rate of seedlings are not greatly enhanced.

Further, it can be found that growth rates of *Pinus densiflora* may vary depending on the content ratio of the soil improving agent. It can be said that, when the soil improving agent has a volume ratio of the second culture medium and the soil improving component of 1:1-12, excellent height-growth is exhibited. More particularly, it can be found that a volume ratio of 1:2-6 exhibits the most excellent height growth.

As a result, it can be found that the growth rate of the seedlings is most excellent, when the medium, in which *Pisolithus tinctorius* is solid cultured, is introduced in soil and the soil improving agent having the second culture medium and the soil improving component at a volume ratio of 1:2-6 is introduced after sowing.

### EXPERIMENTAL EXAMPLE 2. INVESTIGATION OF PRESENCE AND ABSENCE OF MYCORRHIZA

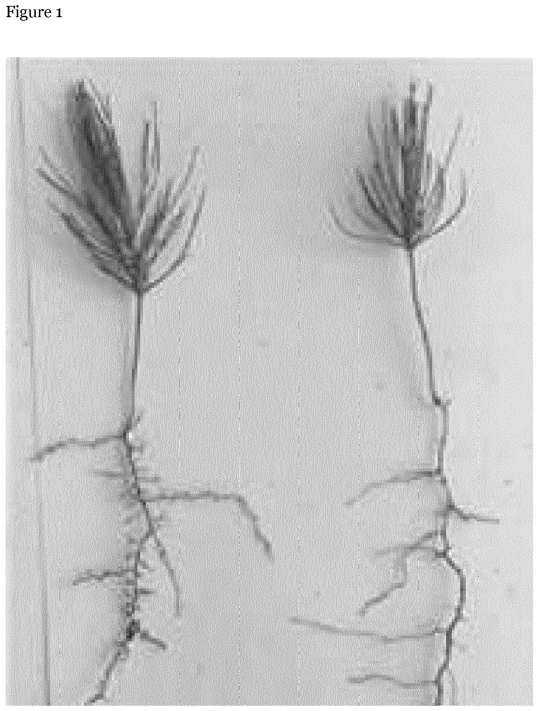

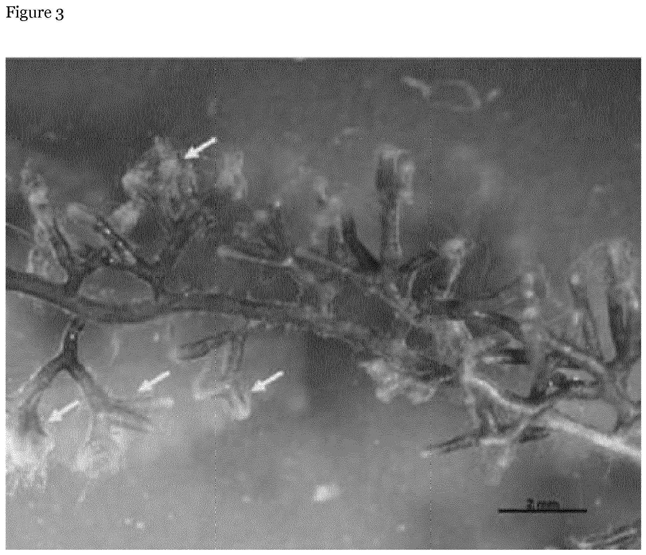

Soil around roots of *Pinus densiflora* seedlings cultivated for two months in Examples 1-12 is gradually removed, while roots were collected. To investigate presence and absence of a mycorrhiza, shapes of the roots were observed through a dissecting microscope (Zeiss, stereo discovery v8), and a rate of mycorrhiza infection was measured. The results are shown in Table 5 below and FIGS. 1 to 3.

For the investigation of a rate of mycorrhiza infection, the grid method was used. More particularly, a collected rootlet was placed into a petri-dish and distilled water was added to prevent the rootlet from dryness. Then, a paper having a grid (both width and length intervals: 1 cm) of a checker figure was placed in the bottom of the dissecting microscope. Via the ocular lens of the dissecting microscope, it has been investigated whether the root was infected or not, where the observed rootlet was placed at the point where the root and grid cross over each other. Rootlets crossing over at least 50 meeting points on the grid were observed to compile statistics for calculating the infection rate.

**[Table 5]**

| Rate of mycorrhiza infection depending on content ratio of second culture medium and soil improving component | |
|---|---|
| | Infection rate (%) |
| Example 1 | 38 |
| Example 2 | 50 |
| Example 3 | 62 |
| Example 4 | 65 |
| Example 5 | 40 |
| Example 6 | 55 |
| Example 7 | 70 |
| Example 8 | 68 |
| Example 9 | 39 |
| Example 10 | 53 |
| Example 11 | 65 |
| Example 12 | 68 |

As shown in FIG. 1 below, it can be found that, in *Pinus densiflora* seedlings after two months of growth in infertile soil, the shape of roots in the case where *Pisolithus tinctorius* is inoculated (left side) differs from that of roots in the case where *Pisolithus tinctorius* is not inoculated (right side).

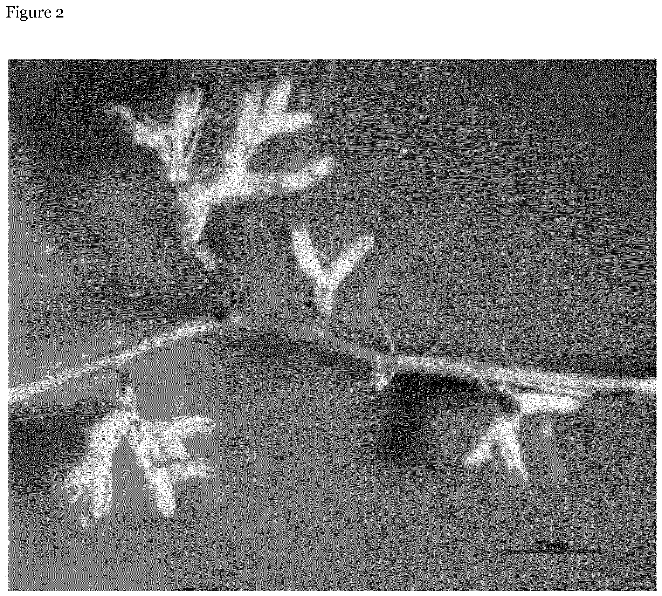

In addition, as shown in FIG. 2 below, it can be found that, in the seedling with the inoculation with *Pisolithus tinctorius,* the root infected with the mycorrhiza is diverged in a Y-shape or has a club shape, exhibiting an increased diameter leading to a plumped end, and shows frequently observed hyphae of fungi around rootlets. Moreover, it can be found that a length of the hyphae of *Pisolithus tinctorius* is about 1-2 mm.

Further, as shown in Table 5 above, it can be found that the infection rate is increased, compared to roots of the control.

## Claims

1. A method of afforesting infertile soil using *Pisolithus tinctorius,* comprising:
a first step for disinfecting soil;
a second step for introducing, to the disinfected soil, a bark and medium, in which *Pisolithus tinctorius* is cultured, and mixing the resultant;
a third step for disinfecting a seed of a plant species, sowing the seed in the soil in step 2, then, introducing a soil improving agent, and mulching with disinfected straws;
a fourth step for cultivating the plant species sowed in the soil to prepare a seedling; and
a fifth step for harvesting the prepared seedlings and afforesting infertile soil.

2. The method of afforesting infertile soil using *Pisolithus tinctorius* of claim 1, wherein the disinfecting is performed by using a soil fumigant which comprises at least one selected from the group consisting of chloropicrin, methyl bromide, and cyanide lime.

3. The method of afforesting infertile soil using *Pisolithus tinctorius* of claim 1, wherein the medium, in which *Pisolithus tinctorius* is cultured, is prepared by: inoculating *Pisolithus tinctorius* into a medium including a first culture medium and artificial culture soil including at least one selected from the group consisting of bentonite, vermiculite, zeolite, and peat moss; and culturing the resultant for 50-100 days at 20-30°C.

4. The method of afforesting infertile soil using *Pisolithus tinctorius* of claim 3, wherein the artificial culture soil comprises vermiculite, and peat moss.

5. The method of afforesting infertile soil using *Pisolithus tinctorius* of claim 3, wherein the first culture medium comprises distilled water, potassium monophosphate, ammonium diphosphate, magnesium sulfate, calcium nitrate, iron chloride, thiamine, malt extracts, and glucose.

6. The method of afforesting infertile soil using *Pisolithus tinctorius* of claim 5, wherein the second culture medium comprises 0.01-0.05 parts by weight of potassium monophosphate, 0.01-0.03 parts by weight of ammonium diphosphate, 0.005-0.02 parts by weight of magnesium sulfate, 0.001-0.01 parts by weight of calcium nitrate, 0.0005-0.002 parts by weight of iron chloride, and 0.000005-0.00002 parts by weight of thiamine with respect to 100 parts weight of distilled water.

7. The method of afforesting infertile soil using *Pisolithus tinctorius* of claim 1, wherein the bark and medium, in which *Pisolithus tinctorius* is cultured in step 2, are introduced into the soil in an amount of 5-10 L per 1 m² of soil.

8. The method of afforesting infertile soil using *Pisolithus tinctorius* of claim 7, wherein the medium, in which *Pisolithus tinctorius* is solid cultured, and the bark are included at a volume ratio of 1:4-6.

9. The method of afforesting infertile soil using *Pisolithus tinctorius* of claim 1, wherein the plant species comprises at least one selected from the group consisting of *Pinus* spp., *Keteleeria* spp., *Larix* spp., *Picea* spp., *Tsuga* spp., *Abies* spp., *Pseudotsuga* spp., *Cedrus* spp., *Pseudolarix* spp., *Salix* spp., *Populus* spp., *Chosenia* spp., *Betula* spp., *Alnus* spp., *Carpinus* spp., *Ostrya* spp., *Corylus* spp., *Fagus* spp., *Castanea* spp., *Castanopsis* spp., *Lithocarpus* spp., *Quercus* spp., *Tilia* spp. and *Grewia* spp.

10. The method of afforesting infertile soil using *Pisolithus tinctorius* of claim 1, wherein, in step 3, the plant species is sowed in soil at a depth of 2-10 cm, such that a space between seeds is 3-5 cm and a space between lines is 10-15 cm.

11. The method of afforesting infertile soil using *Pisolithus tinctorius* of claim 1, wherein, in step 3, the soil improving agent including *Pisolithus tinctorius* comprises a second culture medium and a soil improving component at a volume ratio of 1:1-12.

12. The method of afforesting infertile soil using *Pisolithus tinctorius* of claim 11, wherein the second culture medium comprises 0.08-0.15 parts by weight of potassium monophosphate, 0.01-0.03 parts by weight of ammonium diphosphate, 0.01-0.02 parts by weight of magnesium sulfate, 0.01-0.05 parts by weight of calcium nitrate, 0.0005-0.002 parts by weight of iron chloride, and 0.00001-0.00003 parts by weight of thiamine with respect to 100 parts weight of distilled water.

13. The method of afforesting infertile soil using *Pisolithus tinctorius* of claim 11, wherein the soil improving component comprises 20-40 parts by weight of a nitric acid compound, 20-40 parts by weight of a phosphoric acid compound, 2-4 parts by weight of a sulfuric acid compound and 0.02-0.04 parts by weight of a boron compound with respect to 100 parts by weight of the artificial culture soil including at least one selected from the group consisting of bentonite, vermiculite, zeolite, and peat moss.

14. The method of afforesting infertile soil using *Pisolithus tinctorius* of claim 11, wherein, in step 3, the soil improving agent is introduced to the soil in an amount of 1-5 L per 1 m² of soil.

15. The method of afforesting infertile soil using *Pisolithus tinctorius* of claim 1, further comprising step 4-1 in which hyphae of *Pisolithus tinctorius* are added to the soil where the seedling is cultivated in step 4.

## Patentansprüche

1. Verfahren zur Aufforstung von unfruchtbarem Boden mit *Pisolithus tinctorius,* umfassend:
einen ersten Schritt zum Desinfizieren des Bodens;
einen zweiten Schritt zum Einbringen von Rinde und einem Medium, in dem *Pisolithus tinctorius* kultiviert wird, in den desinfizierten Boden und Vermischen des Ergebnisses;
einen dritten Schritt zum Desinfizieren eines Samens einer Pflanzenart, Säen des Samens in den Boden in Schritt 2, dann Einbringen eines Bodenverbesserungsmittels und Mulchen mit desinfiziertem Stroh;
einen vierten Schritt zum Kultivieren der in den Boden gesäten Pflanzenart, um einen Sämling zu erzeugen; und
einen fünften Schritt zum Ernten der erzeugten Sämlinge und Aufforsten des unfruchtbaren Bodens.

2. Verfahren zur Aufforstung von unfruchtbarem Boden mit *Pisolithus tinctorius* nach Anspruch 1, wobei das Desinfizieren unter Verwendung eines Bodenbegasungsmittels durchgeführt wird, das zumindest eines umfasst, das ausgewählt ist aus der Gruppe, bestehend aus Chlorpikrin, Methylbromid und cyanidhaltigem Kalk.

3. Verfahren zur Aufforstung von unfruchtbarem Boden mit *Pisolithus tinctorius* nach Anspruch 1, wobei das Medium, in dem *Pisolithus tinctorius* kultiviert wird, hergestellt wird durch: Beimpfen eines Mediums, das ein erstes Kulturmedium und einen künstlichen Kulturboden einschließt, der mindestens eines einschließt, das ausgewählt ist aus der Gruppe, bestehend aus Bentonit, Vermikulit, Zeolith und Torfmoos, mit *Pisolithus tinctorius*; und Kultivieren des Ergebnisses für 50-100 Tage bei 20-30 °C.

4. Verfahren zur Aufforstung von unfruchtbarem Boden mit *Pisolithus tinctorius* nach Anspruch 3, wobei der künstliche Kulturboden Vermikulit und Torfmoos umfasst.

5. Verfahren zur Aufforstung von unfruchtbarem Boden mit *Pisolithus tinctorius* nach Anspruch 3, wobei das erste Kulturmedium destilliertes Wasser, Kaliummonophosphat, Ammoniumdiphosphat, Magnesiumsulfat, Calciumnitrat, Eisenchlorid, Thiamin, Malzextrakte und Glukose umfasst.

6. Verfahren zur Aufforstung von unfruchtbarem Boden mit *Pisolithus tinctorius* nach Anspruch 5, wobei das zweite Kulturmedium 0,01-0,05 Gewichtsteile Kaliummonophosphat, 0,01-0,03 Gewichtsteile Ammoniumdiphosphat, 0,005-0,02 Gewichtsteile Magnesiumsulfat, 0,001-0,01 Gewichtsteile Calciumnitrat, 0,0005-0,002 Gewichtsteile Eisenchlorid und 0,000005-0,00002 Gewichtsteile Thiamin im Verhältnis zu 100 Gewichtsteilen destillierten Wassers umfasst.

7. Verfahren zur Aufforstung von unfruchtbarem Boden mit *Pisolithus tinctorius* nach Anspruch 1, wobei die Rinde und das Medium, in dem in Schritt 2 *Pisolithus tinctorius* kultiviert wird, in einer Menge von 5-10 1 pro 1 m² Boden eingebracht werden.

8. Verfahren zur Aufforstung von unfruchtbarem Boden mit *Pisolithus tinctorius* nach Anspruch 7, wobei das Medium, in dem *Pisolithus tinctorius* fest kultiviert wird, und die Rinde in einem Volumenverhältnis von 1:4-6 einbracht werden.

9. Verfahren zur Aufforstung von unfruchtbarem Boden mit *Pisolithus tinctorius* nach Anspruch 1, wobei die Pflanzenart mindestens eine umfasst, die ausgewählt ist aus der Gruppe, bestehend aus *Pinus* spp., *Keteleeria* spp., *Larix* spp., *Picea* spp., *Tsuga* spp., *Abies* spp., *Pseudotsuga* spp., *Cedrus* spp., *Pseudolarix* spp., *Salix* spp., *Populus* spp., *Chosenia* spp., *Betula* spp., *Alnus* spp., *Carpinus* spp., *Ostrya* spp., *Corylus* spp., *Fagus* spp., *Castanea* spp., *Castanopsis* spp., *Lithocarpus* spp., *Quercus* spp., *Tilia* spp. und *Grewia* spp.

10. Verfahren zur Aufforstung von unfruchtbarem Boden mit *Pisolithus tinctorius* nach Anspruch 1, wobei in Schritt 3 die Pflanzenart in einer Tiefe von 2-10 cm so ausgesät wird, dass ein Abstand zwischen den Samen 3-5 cm und ein Abstand zwischen den Reihen 10-15 cm beträgt.

11. Verfahren zur Aufforstung von unfruchtbarem Boden mit *Pisolithus tinctorius* nach Anspruch 1, wobei in Schritt 3 das *Pisolithus tinctorius* enthaltende Bodenverbesserungsmittel ein zweites Kulturmedium und eine Bodenverbesserungskomponente in einem Volumenverhältnis von 1:1-12 umfasst.

12. Verfahren zur Aufforstung von unfruchtbarem Boden mit *Pisolithus tinctorius* nach Anspruch 11, wobei das zweite Kulturmedium 0,08-0,15 Gewichtsteile Kaliummonophosphat, 0,01-0,03 Gewichtsteile Ammoniumdiphosphat, 0,01-0,02 Gewichtsteile Magnesiumsulfat, 0,01-0,05 Gewichtsteile Calciumnitrat, 0,0005-0,002 Gewichtsteile Eisenchlorid und 0,00001-0,00003 Gewichtsteile Thiamin im Verhältnis zu 100 Gewichtsteilen destillierten Wassers umfasst.

13. Verfahren zur Aufforstung von unfruchtbarem Boden mit *Pisolithus tinctorius* nach Anspruch 11, wobei die Bodenverbesserungskomponente 20-40 Gewichtsteile einer Salpetersäureverbindung, 20-40 Gewichtsteile einer Phosphorsäureverbindung, 2-4 Gewichtsteile einer Schwefelsäureverbindung und 0,02-0,04 Gewichtsteile einer Borverbindung im Verhältnis zu 100 Gewichtsteilen des künstlichen Kulturbodens umfasst, der mindestens eines einschließt, das ausgewählt ist aus der Gruppe, bestehend aus Bentonit, Vermikulit, Zeolith und Torfmoos.

14. Verfahren zur Aufforstung von unfruchtbarem Boden mit *Pisolithus tinctorius* nach Anspruch 11, wobei in Schritt 3 das Bodenverbesserungsmittel in einer Menge von 1-5 1 pro 1 m² Boden in den Boden eingebracht wird.

15. Verfahren zur Aufforstung von unfruchtbarem Boden mit *Pisolithus tinctorius* nach Anspruch 1, ferner umfassend Schritt 4-1, in dem Hyphen von *Pisolithus tinctorius* zu dem Boden hinzugefügt werden, in dem in Schritt 4 der Sämling kultiviert wird.

## Revendications

1. Procédé de forestation de sol infertile en utilisant *Pisolithus tinctorius,* comprenant :
une première étape de désinfection du sol ;
une deuxième étape d'introduction, dans le sol désinfecté, d'une écorce et d'un milieu, dans lesquels *Pisolithus tinctorius* est cultivé, et de mélange du composé résultant ;
une troisième étape de désinfection d'une graine d'espèce végétale, d'ensemencement de la graine dans le sol de l'étape 2, puis d'introduction d'un agent d'amélioration de sol et de paillage avec des brindilles désinfectées ;
une quatrième étape de culture de l'espèce végétale ensemencée dans le sol pour préparer un semis ; et
une cinquième étape de récolte des semis préparés et de forestation du sol infertile.

2. Procédé de forestation de sol infertile en utilisant *Pisolithus tinctorius* selon la revendication 1, ladite désinfection étant effectuée au moyen d'un fumigant de sol qui comprend au moins un élément choisi dans le groupe constitué par la chloropicrine, le bromure de méthyle et la chaux au cyanure.

3. Procédé de forestation de sol infertile en utilisant *Pisolithus tinctorius* selon la revendication 1, ledit milieu dans lequel *Pisolithus tinctorius* est cultivé, étant préparé par : inoculation de *Pisolithus tinctorius* dans un milieu comprenant un premier milieu de culture et un sol de culture artificiel comprenant au moins un élément choisi dans le groupe constitué par la bentonite, la vermiculite, la zéolite et la mousse de tourbe ; et culture du composé résultant pendant 50 à 100 jours à une température de 20 à 30°C.

4. Procédé de forestation de sol infertile en utilisant *Pisolithus tinctorius* selon la revendication 3, ledit sol de culture artificiel comprenant de la vermiculite et de la mousse de tourbe.

5. Procédé de forestation de sol infertile en utilisant *Pisolithus tinctorius* selon la revendication 3, ledit premier milieu de culture comprenant de l'eau distillée, du monophosphate de potassium, du diphosphate d'ammonium, du sulfate de magnésium, du nitrate de calcium, du chlorure de fer, de la thiamine, des extraits de malt et du glucose.

6. Procédé de forestation de sol infertile en utilisant *Pisolithus tinctorius* selon la revendication 5, ledit second milieu de culture comprenant 0,01 à 0,05 parties en poids de monophosphate de potassium, 0,01 à 0,03 parties en poids de diphosphate d'ammonium, 0,005 à 0,02 parties en poids de sulfate de magnésium, 0,001 à 0,01 parties en poids de nitrate de calcium, 0,0005 à 0,002 parties en poids de chlorure de fer et 0,000005 à 0,00002 parties en poids de thiamine par rapport à 100 parties en poids d'eau distillée.

7. Procédé de forestation de sol infertile en utilisant *Pisolithus tinctorius* selon la revendication 1, ladite écorce et ledit milieu, dans lesquels *Pisolithus tinctorius* est cultivé dans l'étape 2, étant introduits dans le sol en une quantité de 5 à 10 1 par 1 m² de sol.

8. Procédé de forestation de sol infertile en utilisant *Pisolithus tinctorius* selon la revendication 7, ledit milieu, dans lequel *Pisolithus tinctorius* est cultivé sur solide, et ladite écorce étant inclus à un rapport volumique de 1:4 à 6.

9. Procédé de forestation de sol infertile en utilisant *Pisolithus tinctorius* selon la revendication 1, ladite espèce de plante comprenant au moins une espèce choisie dans le groupe constitué par *Pinus* spp., *Keteleeria* spp., *Larix* spp., *Picea* spp., *Tsuga* spp., *Abies* spp., *Pseudotsuga* spp., *Cedrus* spp., *Pseudolarix* spp., *Salix* spp., *Populus* spp., *Chosenia* spp., *Betula* spp., *Alnus* spp., *Carpinus* spp., *Ostrya* spp., *Corylus* spp., *Fagus* spp., *Castanea* spp., *Castanopsis* spp., *Lithocarpus* spp., *Quercus* spp., *Tilia* spp. et *Grewia* spp.

10. Procédé de forestation de sol infertile en utilisant *Pisolithus tinctorius* selon la revendication 1, dans l'étape 3, ladite espèce végétale étant plantée dans le sol à une profondeur de 2 à 10 cm de sorte que l'espacement entre les graines soit de 3 à 5 cm et que l'espacement entre les lignes soit de 10 à 15 cm.

11. Procédé de forestation de sol infertile en utilisant *Pisolithus tinctorius* selon la revendication 1, dans l'étape 3, ledit agent d'amélioration de sol contenant *Pisolithus tinctorius* comprenant un second milieu de culture et un composant d'amélioration de sol à un rapport volumique de 1:1 à 12.

12. Procédé de forestation de sol infertile en utilisant *Pisolithus tinctorius* selon la revendication 11, ledit second milieu de culture comprenant 0,08 à 0,15 parties en poids de monophosphate de potassium, 0,01 à 0,03 parties en poids de diphosphate d'ammonium, 0,01 à 0,02 parties en poids de sulfate de magnésium, 0,01 à 0,05 parties en poids de nitrate de calcium, 0,0005 à 0,002 parties en poids de chlorure de fer et 0,00001 à 0,00003 parties en poids de thiamine par rapport à 100 parties en poids d'eau distillée.

13. Procédé de forestation de sol infertile en utilisant *Pisolithus tinctorius* selon la revendication 11, ledit composant d'amélioration de sol comprenant 20 à 40 parties en poids d'un composé d'acide nitrique, 20 à 40 parties en poids d'un composé d'acide phosphorique, 2 à 4 parties en poids d'un composé d'acide sulfurique et 0,02 à 0,04 parties en poids d'un composé de bore par rapport à 100 partie en poids du sol de culture artificiel comprenant au moins un élément choisi dans le groupe constitué par la bentonite, la vermiculite, la zéolite et la mousse de tourbe.

14. Procédé de forestation de sol infertile en utilisant *Pisolithus tinctorius* selon la revendication 11, dans l'étape 3, ledit agent d'amélioration de sol étant introduit dans le sol en une quantité de 1 à 5 1 par 1 m² de sol.

15. Procédé de forestation de sol infertile en utilisant *Pisolithus tinctorius* selon la revendication 1, comprenant en outre l'étape 4-1 dans laquelle des hyphes de *Pisolithus tinctorius* sont ajoutés dans le sol où le semis est cultivé dans l'étape 4.
